# EUROPÄISCHE PATENTANMELDUNG

(11) **EP 3 683 875 A1**
(43) Veröffentlichungstag der Anmeldung: **22.07.2020**
(21) Anmeldenummer: 19151868.7
(22) Anmeldetag: 15.01.2019
(51) Int. Cl.: H01M 4/42, C25B 5/00, C25B 1/02, H01M 8/0656, H01M 12/06

(54) **ELEKTROCHEMISCHE GASENTWICKLUNGSZELLE, INSBESONDERE QUECKSILBERFREIE WASSERSTOFFENTWICKLUNGSZELLE**

(71) Anmelder: simatec ag, 3380 Wangen an der Aare (CH)
(72) Erfinder: HÄRING, Pascal, 4132 Muttenz (CH); GFELLER, Hans, 4912 Aarwangen (CH); GERBER, Marco, 4053 Basel (CH); STEIGER, Beat, 4492 Tecknau (CH)
(74) Vertreter: Fischer, Michael

(57) **Zusammenfassung**

Der vorliegenden Erfindung liegt daher die Aufgabe zugrunde, eine elektrochemische Zelle und im Besonderen eine quecksilberfreie Wasserstoffentwicklungszelle anzugeben, die frei von Raney-Nickel ist und hinsichtlich einer Blindgasungsrate und den sonstigen elektrochemischen Eigenschaften den elektrochemischen Gasentwicklungszellen entsprechen kann, die bisher mit dem Einsatz von Raney-Nickel realisiert worden sind.

Die Aufgabe wird erfindungsgemäss durch eine elektrochemische Gasentwicklungszelle (2), insbesondere quecksilberfreie Wasserstoffentwicklungszelle, gelöst, die eine Metallanode (10), einen Elektrolyten (14) und eine Gasdiffusionselektrode (20) aufweist, wobei die Gasdiffusionselektrode (10) als metallenthaltender Hauptbestandteil eine Stahllegierung und/oder eine katalytische anorganische Metallverbindung und/oder Platin- oder Palladium-Pulver, alle vorstehend genannten Materialien frei von Raney-Nickel, aufweist.

Die Vermeidung von Raney-Nickel bietet mehr Arbeitssicherheit. Die gefundenen Ersatzmaterialien haben signifikant weniger Risiken bzgl. Transport, Brandgefahr und Toxikologie. Die benötigten Präventivmassnahmen sind entsprechend wesentlich weniger aufwändig. Der verwendete Nickelanteil (falls eine nickelhaltige Verbindung verwendet wird) liegt mindestens um einen Faktor 2 tiefer oder tendiert gegen Null. Die gefundenen Ersatzmaterialien haben gute bis sehr gute elektrochemische Aktivität und führen zu Wasserstoffentwicklungszellen, welche in Bezug auf die Effektivität der Wasserstoffentwicklung und der Stabilität ausreichend sind wie Zellen, die mit einer Raney-Nickel enthaltenden Kathode ausgestattet sind.

## Beschreibung

Die vorliegende Erfindung bezieht sich auf eine elektrochemische Gasentwicklungszelle, insbesondere auf eine quecksilberfreie Wasserstoffentwicklungszelle.

Gasentwicklungszellen werden in der Regel dazu eingesetzt, mittels der Gasentwicklung einen Druck aufzubauen und auf diese Weise fluide Medien selbsttätig zu bewegen/fördern. Beispielhaft für die fluiden Medien können Schmierstoffe, Duftstoffe und Arzneimittel genannt werden. Gattungsgemässe Gasentwicklungszellen sind beispielsweise aus der deutschen Offenlegungsschrift 35 32 335 und der europäischen Patentanmeldung EP 1 396 899 A2 bekannt.

Moderne Gasentwicklungszellen arbeiten in der Regel als Wasserstoffentwicklungszellen. Dabei wird in einer elektrochemischen Reaktion an der Anode metallisches Zink in einem alkalischen Elektrolyten zum zweifach positiv geladenen Zink-Ion (Zn²⁺) oxidiert und an der Kathode das erwünschte Wasserstoffgas durch eine Reduktionsreaktion aus Wasser erzeugt. Diese elektrochemischen Gasentwicklungszellen wurden oft mit quecksilberhaltigem Zinkpulver aufgebaut. Das Quecksilber dient dabei als Korrosionsschutz für einen Stromsammler auf der negativen metallisches Zink anbietenden Batterieseite (Anodenseite bei Entladung) und trägt ebenfalls zur Verringerung der ungewollten Wasserstoffentwicklung durch Selbstkorrosion des Zinks bei, bei der sich ansonsten eine ungewollte spontane Wasserstoffentwicklung auf der zinkhaltigen Anode durch eine alkalische Zinkkorrosion oder durch eine Ausbildung eines elektrochemischen Lokalelements mit der Oberfläche des Stromsammlers einstellen würde. Der Gehalt an Quecksilber beträgt in existierenden Gaszellen vom Typ Zn/Alkalielektrolyt/Kohle-Nickel bezogen auf den Gesamtmetallgehalt im Zinkpulver etwa 1 bis 8%. Neben diesem Gehalt an Quecksilber können derartige Gasentwicklungszellen auch kleinere Bestandteile von Blei und Cadmium enthalten. Diese Beimengungen liegen typischer Weise ebenfalls im Bereich von 0,5 bis 6%.

Aufgrund der Toxizität der Metalle Quecksilber, Blei und Cadmium wurde im Zuge strenger gesetzlicher Auflagen an einem Ersatz dieser Stoffe durch weniger toxische Metalle bzw. nichtmetallische Additive gearbeitet bzw. der Einsatz weniger toxischer Metalle bei gleichzeitigem Verbot von Quecksilber, Blei und Cadmium verbindlich vorgeschrieben. Spuren von Hg, Cd, und Pb können jedoch noch vorkommen An dieser Stelle sei daher bei dem Verzicht auf Hg, Cd, Pb-Zusätze bzw. auf die Nicht-Notwendigkeit der Deklaration von diesen Metallen im Sinne der EU-Batteriedirektive hinzuweisen. Der Artikel 21(3) der EU-Batteriedirektive 2006/66/EC, mit den Anhängen aus 2013/56/EU, sagt, dass im Sinne dieser Direktive von einer Quecksilber-, Cadmium- und Bleifreiheit gesprochen werden kann, wenn die entsprechenden Gehalt für Hg weniger als 5 ppm Hg, für Cd weniger als 20 ppm und für Pb weniger als 40 ppm, bezogen auf das Gesamtgewicht des Produkts, betragen. Eine diesbezügliche vorschriftsgemässe Lösung wurde durch die europäische Patentanmeldung EP 2 337 124 A1 offenbart.

Mit den Additiven Indium und Bismut gelingt es, die ZinkSelbstentladung in alkalischen Elektrolyten zu unterdrücken und so eine kontrollierte und langzeitlineare Oxidation des Zinks und damit die gewünschte Stabilität der Wasserstoffentwicklung einzustellen. Diese Additive vermeiden den Einsatz von Quecksilber, Cadmium und Blei, so dass im Sinne der voranstehend erläuterten EU-Verordnung von einer quecksilber-, cadmium- und bleifreien Gasentwicklungszelle gesprochen werden kann, weil die in der EU-Verordnung festgeschriebenen Grenzwerte für diese Metalle unterschritten werden und die so aufgebaute Gasentwicklungszelle damit nicht mehr meldepflichtig ist.

Rein technisch können natürlich noch Spuren dieser Metalle vorhanden sein und sogar gewünscht sein, aber der Gehalt dieser Metalle kann aufgrund der Additive nun klar unter die angegebenen Grenzwerte gedrückt werden.

Weiter werden derartige elektrochemische Wasserstoffentwicklungszellen heute mit einem Zusatz von typischerweise 20% bis zu 30% Raney-Nickel als elektrochemischer Katalysator in der positiven Elektrode (Kathode bei Entladung) aufgebaut. Um die pyrophoren Eigenschaften des Raney-Nickels zu unterdrücken, wird dieser typischerweise mit Sauerstoff und Wasserdampf bei erhöhter Temperatur passiviert. Dieser Prozess, sowie die folgenden Prozesse, welche Raney-Nickel, bzw. dessen Oxide, Oxi-Hydroxide oder Hydroxide verwenden, müssen unter den entsprechenden Schutzmassnahmen für die Handhabung und Verarbeitung durchgeführt werden. Die Risiken sind neben der Selbstentzündung signifikante Gesundheitsrisiken, falls Personen mit Raney-Nickel in Kontakt kommen. Die entsprechenden Regelungen für eine sichere Verarbeitung sind von Land zu Land etwas unterschiedlich, verweisen jedoch stets auf die dieselben Gefahren.

Der vorliegenden Erfindung liegt daher die Aufgabe zugrunde, eine elektrochemische Zelle und im Besonderen eine quecksilberfreie Wasserstoffentwicklungszelle anzugeben, die frei von Raney-Nickel ist und hinsichtlich einer Blindgasungsrate und den sonstigen elektrochemischen Eigenschaften den elektrochemischen Gasentwicklungszellen entsprechen kann, die bisher mit dem Einsatz von Raney-Nickel realisiert worden sind.

Die Aufgabe wird erfindungsgemäss durch eine elektrochemische Gasentwicklungszelle, insbesondere quecksilberfreie Wasserstoffentwicklungszelle, gelöst, die eine Metallanode, einen Elektrolyten und eine Gasdiffusionselektrode aufweist, wobei die Gasdiffusionselektrode als metallenthaltender Hauptbestandteil eine Stahllegierung und/oder eine katalytische anorganische Metallverbindung und/oder Platin- oder Palladium-Pulver, alle vorstehend genannten Materialien frei von Raney-Nickel, aufweist.

Die Vermeidung von Raney-Nickel bietet mehr Arbeitssicherheit. Die gefundenen Ersatzmaterialien haben signifikant weniger Risiken bzgl. Transport, Brandgefahr und Toxikologie. Die benötigten Präventivmassnahmen sind entsprechend wesentlich weniger aufwändig. Der verwendete Nickelanteil (falls eine nickelhaltige Verbindung verwendet wird) liegt mindestens um einen Faktor 2 tiefer oder tendiert gegen Null. Die gefundenen Ersatzmaterialien haben gute bis sehr gute elektrochemische Aktivität und führen zu Wasserstoffentwicklungszellen, welche in Bezug auf die Effektivität der Wasserstoffentwicklung und der Stabilität ähnlich sind wie Zellen, die mit einer Raney-Nickel enthaltenden Kathode ausgestattet sind.

In einer vorteilhaften Ausgestaltung der Erfindung kann der metallenthaltende Hauptbestandteil der Gasdiffusionselektrode als Komposit auf einem Trägermaterial, vorzugsweise Kohlenstoff, eine Siliziumverbindung oder ein Polymer, wie z.B. PTFE, aufgebracht sein. Auf diese Weise lassen sich die Eigenschaften (Porosität, Benetzung, Aktivität, mechanische Stabilität etc.) der Gasdiffusionselektrode in vergleichsweise weiten Grenzen bedarfsgerecht einstellen.

Zum Ersatz des Raney-Nickel hat es sich gezeigt, dass der metallenthaltende Hauptbestandteil der Gasdiffusionselektrode eine oder mehrere der nachfolgenden Substanzen umfassen kann:
a) eine Nickel-Eisen-Legierung;
b) eine Chrom-Nickel-Legierung (Cr-Ni-Stahl können enthalten: Chrom / Nickel / Eisen / Mo, V, W etc.);
c) eine Nickel-Eisen-Schwefel-Verbindung, z.B. Pentlandit;
d) eine Nickel-Kupfer-Legierung;
e) eine Wolfram-Bronze, insbesondere Wolfram-Natrium-Bronze;
f) eine Wolfram-Kohlenstoff-Verbindung, insbesondere Wolfram-Carbid;
g) eine Wolfram-Selen-Verbindung, insbesondere Wolfram-Di-Selenid; und/oder
h) gemischte Metalloxide, welche Oxide eines oder mehrerer der Metalle Ni, Fe, Zn, Mg, Cr und Cu enthalten, vorzugsweise Eisen-oxid, wie Magnetit (Eisen(II/III)-Oxide), Zink-Eisen-Oxide wie beispielsweise ZnFe₃O₄, und Mg-Eisenoxide.

Um auch im Fall eines Komposites eine hinreichende katalytische Aktivität bieten zu können, ist es vorteilhaft, wenn präferenziell ein Komposite mit Kohlenstoff mit einer Belegung von 500 ppm bis 20000 ppm des metallenthaltenden Hauptbestandteils der Gasdiffusionselektrode vorliegt.

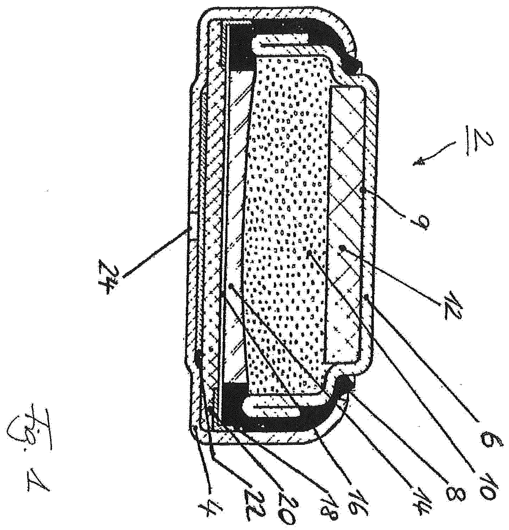

Bevorzugte Ausführungsbeispiele der vorliegenden Erfindung werden nachfolgend anhand einer Zeichnung näher erläutert. Dabei zeigt die Abbildung in schematischer Ansicht den Aufbau einer erfindungsgemässen Gasentwicklungszelle 2. Die Gasentwicklungszelle 2 umfasst einen Becher 4 und einen Deckel 6, die zusammen mit einer Dichtung 8 das Gehäuse der Gasentwicklungszelle 2 bilden. Der Boden des Deckels 6 trägt zusätzlich auf seiner Innenseite eine Beschichtung 9 aus einer Cu/Zn-Legierung, mit der die Wasserstoffüberspannung der Oberfläche des elektroaktiven Materials erhöht, die Korrosionseigenschaften einer Zinkanode 10 verbessert und der Übergangswiderstand zwischen der Zinkanode 10 und dem Deckelboden, der als Stromsammler dient, stabilisiert werden kann. Diese Beschichtung 9 kann auch aus einer Cu/Sn- oder einer Cu/Zn/Sn-Legierung oder auch aus beliebigen Kombinationen der vorstehenden Legierungen bestehen.

Die Zink-Anode 10 besteht vorliegend aus Zink-Pulver mit Additiven von Indium und Bismut. Die Konzentration von Indium und Bismut beträgt jeweils etwa 300 ppm. Diese Konzentration kann aber insgesamt mit vom Bereich von etwa 50 bis 2000 ppm liegen. Die Korngrössen der Indium und Bismut-Beimengungen korrespondieren zu den Korngrössen des Zinkpulvers, die im Bereich von 1 bis 500 µm liegen. Diese Korngrössen können aber auch im Bereich von 0,5 bis 1000 µm liegen. Die auf diese Weise gebildete Zink-Anode 10 ist frei von Zusätzen welche Quecksilber, Blei oder Cadmium enthalten. Als Spurenverunreinigung können diese Elemente jedoch noch vorkommen, übersteigen jedoch die Werte von 0.0005% Hg, 0.002% Cd und 0.004% Pb, berechnet auf das Gesamtgewicht der elektrochemischen Zelle nicht. Die Zelle ist deshalb gemäss der europäischen Batteriedirektive 2006/66/EC für diese Elemente nicht deklarationspflichtig. Werden diese Verunreinigungskonzentrationen nicht übertroffen, wird dies allgemein als quecksilberfrei, bleifrei und cadmiumfrei interpretiert. Am Boden des Deckels 6 kann ein poröser kompressionsfähiger Körper 12 angeordnet sein, der zusätzliche Elektrolyt-Lösung bereitstellen kann. Auf der vom Boden des Deckels 6 abgewandten Seite der Zink-Anode 10 ist ein Elektrolytgetränktes Vlies 14 angeordnet. Der Elektrolyt selbst umfasst eine etwa 20 bis 40%igen Kalilauge. Zudem enthält der Elektrolyt Korrosionshemmer und Viskositätsbildner sowie optional oberflächenaktive Stoffe, die insgesamt helfen, das System weiter zu verbessern. Die Wahl dieses Elektrolyten mit seinen vorstehend genannten Zusätzen unterstützt die Verringerung der Zinkselbstentladung, der spontanen und unkontrollierten Wasserstoffentwicklung und der Potentialdifferenz von Lokalementen.

Das Elektrolyt-Flies wird kathodenseitig von einer Separatorfolie 16 abgedeckt. Die Separatorfolie 16 ist eine typische poröse Polymer-Membran, wie sie beispielsweise auch in Batterien mit alkalischem Elektrolyt eingesetzt wird. Die Separatorfolie 16 wird durch einen Stützring 18 in Position gehalten. An die Separatorfolie 16 schliesst sich eine Gasdiffusions-Elektrode 20 an, die aus einer PTFE-gebundenen nickelhaltigen Pulverschicht besteht, die in ein Nickelnetz eingewalzt wurde und zur Becherbodenseite hin eine poröse PTFE-Folie besitzt. Diese Folie ist für die Funktion nicht notwendig, aber sie dient jedoch der besseren Dichtigkeit bzgl. eines Elektrolyten-Ausfliessens in das offene System auf der Gasdiffusionsseite. Der metallische Stützring 18 kontaktiert die Gasdiffusions-Elektrode 20 und verbindet sie elektrisch mit dem Becher 4. Zwischen der Gasdiffusions-Elektrode 20 und dem Boden des Bechers 4 ist noch eine grobporige Vliesschicht 22 eingelegt, die dazu dient, das aus der Gasdiffusions-Elektrode 20 im Betrieb flächig austretende Wasserstoffgas zu einem Loch 24 im Becherboden zu führen und dort austreten zu lassen.

Für die Gasdiffusionselektrode 20 ist es im Sinne der vorliegenden Erfindung besonders bedeutsam, dass die metallenthaltende Hauptkomponente frei von Raney-Nickel ist. Um jedoch eine vergleichbare katalytische Aktivität und Porosität der Gasdiffusionselektrode gewährleisten zu können, wird als metallenthaltender Hauptbestandteil eine Stahllegierung und/oder eine katalytische anorganische Metallverbindung und/oder Platin- oder Palladium-Pulver, alle vorstehend genannten Materialien frei von Raney-Nickel, eingesetzt.

Im Einzelnen wurden experimentelle Untersuchungen für die Zusammensetzung der Gasdiffusionselektrode mit 0% Stahl-316L-Pulver-, mit 28% Stahl-316L-Pulver- und mit 53.8% Stahl-316L-Stahl-Massen-Anteil in der Aktivmischung der Gasdiffusionselektrode durchgeführt. Das verwendete Stahlpulver hatte eine Partikelgrössenverteilung zwischen 10 µm und 45 µm. Die Resultate zeigen, dass 0% Massenanteil an 316L-Stahlpulver zu einer stark reduzierten und ungleichmässigen Aktivität der Elektrode führen,
28% Massenanteil an 316L_Stahlpulver ausreichende und gleichmässige Aktivität der Elektrode im Vergleich zu einer 28% Raney-Nickel enthaltende Elektrode führen,
eine weitere Erhöhung auf 53.8% Massenanteil 316L-Stahlpulver keine weitere Verbesserung der Aktivität zeigt.

Der Versuch mit 28% Massenanteil an signifikant feinerem 316L-Stahlpulver hat gezeigt, dass feineres Pulver eine wesentlich höhere Aktivität zeigt. Insbesondere das Nanopulver von 316L-Stahl (70nm bis 150nm) ist den Stahlpulvern mit Partikelgrössen im Mikrometerbereich bzgl. Aktivität überlegen.

## Patentansprüche

1. Elektrochemische Gasentwicklungszelle (2), insbesondere quecksilberfreie Wasserstoffentwicklungszelle, mit einer Metallanode (10), einem Elektrolyten (14) und einer Gasdiffusionselektrode (20), wobei die Gasdiffusionselektrode (10) als metallenthaltender Hauptbestandteil eine Stahllegierung und/oder eine katalytische anorganische Metallverbindung und/oder Platin- oder Palladium-Pulver, alle vorstehend genannten Materialien frei von Raney-Nickel, aufweist.

2. Elektrochemische Gasentwicklungszelle (2) nach Anspruch 1, **dadurch gekennzeichnet, dass**
der metallenthaltende Hauptbestandteil der Gasdiffusionselektrode als Komposit auf einem Trägermaterial, vorzugsweise Kohlenstoff, eine Siliziumverbindung oder ein Polymer, aufgebracht ist.

3. Elektrochemische Gasentwicklungszelle (2) nach Anspruch 1 oder 2, **dadurch gekennzeichnet, dass**
der metallenthaltende Hauptbestandteil der Gasdiffusionselektrode eine oder mehrere der nachfolgenden Substanzen umfasst:
a) eine Nickel-Eisen-Legierung;
b) eine Chrom-Nickel-Legierung;
c) eine Nickel-Eisen-Schwefel-Verbindung, z.B. Pentlandit;
d) eine Nickel-Kupfer-Legierung;
e) eine Wolfram-Bronze, insbesondere Wolfram-Natrium-Bronze;
f) eine Wolfram-Kohlenstoff-Verbindung, insbesondere Wolfram-Carbid;
g) eine Wolfram-Selen-Verbindung, insbesondere Wolfram-Di-Selenid; und/oder
h) gemischte Metalloxide, welche Oxide eines oder mehrerer der Metalle Ni, Fe, Zn, Mg, Cr und Cu enthalten, vorzugswiese Eisen-oxid, wie Magnetit (Eisen(II/III)-Oxide), Zink-Eisen-Oxide wie beispielsweise ZnFe₃O₄, und Mg-Eisenoxide.

4. Elektrochemische Gasentwicklungszelle (2) nach einem der Ansprüche 1 bis 3,
**dadurch gekennzeichnet, dass**
im Fall eines Komposites präferenziell ein Komposite mit Kohlenstoff mit einer Belegung von 500 ppm bis 20000 ppm des metallenthaltenden Hauptbestandteils der Gasdiffusionselektrode vorliegt.

5. Elektrochemische Gasentwicklungszelle (2) nach einem der Ansprüche 1 bis 4,
**dadurch gekennzeichnet, dass**
Metallpulver und/oder Pulver aus Metalllegierungen mit Partikelgrössen 50 nm bis 100 µm, vorzugsweise von 10 nm bis 1 µm, enthalten ist.
